# EUROPÄISCHE PATENTSCHRIFT

(11) **EP 1 515 844 B1**
(45) Veröffentlichungstag und Bekanntmachung des Hinweises auf die Patenterteilung: **09.07.2008**
(21) Anmeldenummer: 03747419.4
(22) Anmeldetag: 25.04.2003
(51) Int. Cl.: B32B 27/00, C09D 11/10

(54) **MEHRSCHICHTMATERIALIEN ZUM HERSTELLEN VON VERPACKUNGEN**
MULTI-LAYERED MATERIALS FOR PRODUCING PACKAGING
MATERIAUX MULTICOUCHES SERVANT A LA PRODUCTION D'EMBALLAGES

(30) Priorität: 30.04.2002 DE 10219509
(43) Veröffentlichungstag der Anmeldung: 23.03.2005
(73) Patentinhaber: Flint Group Germany GmbH, 70469 Stuttgart (DE); BASF SE, 67056 Ludwigshafen (DE)
(72) Erfinder: BRUCHMANN, Bernd, 67251 Freinsheim (DE); BEDAT, Joelle, F-67850 Offendorf (FR); KACZUN, Jürgen, 67157 Wachenheim (DE); POGANIUCH, Peter, 67434 Neustadt (DE); WAGNER, Eva, 67346 Speyer (DE); STUMBE, Jean-Francois, F-67200 Strasbourg (FR)
(74) Vertreter: Isenbruck, Günter
(86) Internationale Anmeldenummer: PCT/EP2003/004296
(87) Internationale Veröffentlichungsnummer: WO 2003/093002

(56) Entgegenhaltungen:
- EP-A- 0 802 045
- EP-A- 0 882 772
- WO-A-00/77070
- WO-A-02/36697

## Beschreibung

Die Erfindung betrifft Mehrschichtmaterialien zum Herstellen von Verpackungen aus mindestens 2 Folien sowie einer mit einer Verpackungsdruckfarbe gedruckten Schicht, wobei die Verpackungsdruckfarbe einen funktionelle Gruppen umfassenden hyperverzweigten Polyester enthält. Die Erfindung betrifft weiterhin eine Verpackungsdruckfarbe, die einen funktionelle Gruppen aufweisenden, hyperverzweigten Polyester umfasst, sowie die Verwendung dieser Druckfarbe zum Herstellen von Mehrschichtmaterialien.

Mehrschichtmaterialien zum Herstellen von Verpackungen, insbesondere Lebensmittelverpackungen, sind bekannt. Als Beispiele seien EP-A 695 329, EP-A 707 956, EP 802 045, EP-A 1 008 442 oder EP-A 1 162 060 genannt. Derartige Mehrschichtmaterialien bestehen aus zwei oder mehreren Kunststofffolien, beispielsweise Polyolefinfolien, Metallfolien oder metallisierten Kunststofffolien die, beispielsweise durch Laminieren und mit Hilfe geeigneter Kaschierkleber, miteinander verbunden werden. Bei den Folien kann es sich jeweils um einschichtige, aber auch um mehrschichtige, durch Coextrusion hergestellte Folien handeln. Die Verbunde können noch weitere funktionale Schichten, beispielweise Geruchssperrschichten oder Wasserdampfsperren umfassen.

Mehrschichtmaterialien zum Herstellen von Verpackungen sind üblicherweise bedruckt oder beschichtet. Die Druckfarbe kann dabei auf die Oberfläche des Mehrschichtmaterials aufgebracht sein, sie kann sich aber auch zwischen zwei Folien befinden. Drucklacke werden entweder als Grundierung auf den Bedruckstoff aufgetragen (so genannte "primer") oder nach dem Druckvorgang als Schutzüberzug auf den bedruckten Bedruckstoff aufgetragen. Drucklacke enthalten kein Farbmittel, sind aber abgesehen davon im Regelfalle ähnlich wie Druckfarben zusammengesetzt.

Die Anforderungen an Druckfarben bzw. Drucklacke, die zur Herstellung von mehrschichtigen Verpackungsmaterialien geeignet sind, sind vielfältig. Beim Drucken auf nicht saugende Bedruckstoffe wie Polymer- oder Metallfolien kann die Druckfarbe naturgemäß nicht in den Bedruckstoff eindringen, sondern nach dem Abdampfen des Lösungsmittels verbleibt ein getrockneter Film auf dem Bedruckstoff. Druckfarben für derartige Bedruckstoffe müssen daher sehr gute filmbildende Eigenschaften sowie eine ganz besonders gute Haftfestigkeit aufweisen, damit sich der Druckfilm bei mechanischer Beanspruchung nicht wieder vom Untergrund ablöst. Da Verbunde häufig chemisch unterschiedliche Folien enthalten, beispielsweise polare Polyamid- oder PET-Folien und unpolare Polyolefin-Folien, müssen geeignete Druckfarben auch auf verschiedenartigen Untergründen gleichermaßen gut haften.

Druckfarben mit konventionellen Bindemitteln weisen auf vielen Bedruckstoffen keine ausreichende Haftfestigkeit auf, so dass Haftvermittler wie bestimmte Silane oder Titanate zugegeben werden müssen. Beispielhaft sei hier auf US 5,646,200 verwiesen. Aber selbst bei Zusatz von Haftvermittlern ist die Haftung nicht auf allen Bedruckstoffen befriedigend, so dass sich die Folien von mehrschichtigen Verbundmaterialien voneinander lösen können. Da mehrschichtige Verbundmaterialien häufig im Lebensmittel-Bereich eingesetzt werden, ist es weiterhin generell wünschenswert, auf niedermolekulare Bestandteile in Druckfarbenrezepturen so weit wie möglich zu verzichten. Aus ökonomischen Gründen ist es ohnehin wünschenswert.

Dendrimere, Arborole, Starburst Polymers oder hyperverzweigte Polymere sind Bezeichnungen für polymere Strukturen, die sich durch eine verzweigte Struktur mit vielen Verzweigungsstellen und eine hohe Funktionalität auszeichnen. Bei Dendrimeren handelt es sich um molekular einheitliche Makromoleküle mit einem hoch symmetrischen Aufbau. Sie sind aber nur sehr umständlich in vielstufigen Synthesen synthetisierbar und sind dementsprechend nur in geringen Mengen verfügbar und sehr teuer.

Im Gegensatz dazu sind hyperverzweigte Polymere sowohl molekular wie strukturell uneinheitlich. Sie weisen Äste unterschiedlicher Länge und Verzweigung auf. Zur Synthese hyperverzweigter Polymerer eigenen sich insbesondere so genannte ABₓ-Monomere. Diese weisen zwei verschiedene funktionelle Gruppen A und B auf, die unter Bildung einer Verknüpfung miteinander reagieren können. Die funktionelle Gruppe A ist dabei nur einmal pro Molekül enthalten und die funktionelle Gruppe B zweifach oder mehrfach. Durch die Reaktion der besagten ABₓ-Monomere miteinander entstehen unvernetzte Polymere mit regelmäßig angeordneten Verzweigungstellen. Die Polymere weisen an den Kettenenden fast ausschließlich B-Gruppen auf. Nähere Einzelheiten sind beispielsweise in J.M.S. - Rev. Macromol. Chem. Phys., C37(3), 555 - 579 (1997) offenbart.

Sowohl hyperverzweigte wie dendrimere Polyester sind prinzipiell bekannt, beispielsweise OH-Gruppen enthaltende Polyester aus WO 93/17060.

Es ist weiterhin bekannt, hyperverzweigte Polyester mit AcrylatGruppen zu modifizieren, beispielsweise durch Umsetzung der Polyester mit Glycidyl(meth)acrylat wie offenbart von WO 00/77070, WO 00/59982, WO 96/07688 oder WO 96/13558. Derartig modifizierte Polyester können in UV-härtbaren Systemen, beispielsweise UV-härtbaren Lacken eingesetzt werden.

WO 96/13558 offenbart strahlungshärtbare Zusammensetzungen aus ethylenisch ungesättigten Monomeren und hyperverzweigten modifizierten Polyesterpolyolen, die ethylenisch ungesättigte Gruppen als terminale Gruppen aufweisen. Offenbart wird weiterhin die Verwendung derartiger strahlungshärtbarer Zusammensetzungen zur Herstellung von Beschichtungen wie Autolackierungen, Möbellackierungen oder strahlungshärtbarer Druckfarben.

WO 00/77070 offenbart die Modifizierung von einem hyperverzweigten Polyesterpolyol mit einem Gemisch aus (Meth)acrylsäure sowie einer weiteren, davon verschiedenen Carbonsäure wie beispielsweise Laurinsäure. Außerdem wird die Verwendung derartig modifizierter Polyester für UV-härtbare Druckfarben vorgeschlagen.

UV-härtbare Druckfarben umfassen keine Lösemittel, können jedoch nur auf speziell ausgerüsteten Druckmaschinen verdruckt werden und verursachen somit zusätzliche Investitionskosten. Weiterhin ist bei UV-Farben die Haftung des Farbfilms auf wichtigen Bedruckstoffen wie Polyester, Polyamid oder Polypropylen häufig unbefriedigend, so dass viele Anwender Verpackungsdruckfarben den Vorzug geben.

Druckfarben mit hyperverzweigten Polyestern sind in unserer noch unveröffentlichen Anmeldung PCT/EP/01/12520 offenbart. Mehrschichtmaterialien zum Herstellen von Verpackungen, die spezielle hyperverzweigte Polyester enthalten, sind bislang jedoch noch nicht bekannt.

Aufgabe der Erfindung war es, Mehrschichtmaterialien zur Herstellung von Verpackungen bereitzustellen, die eine verbesserte Haftung zwischen den einzelnen Folien aufweisen. Aufgabe war es insbesondere, polare Folien aufweisende Mehrschichtmaterialien bereitzustellen, die eine verbesserte Haftung zwischen den einzelnen Folien aufweisen. Aufgabe war es weiterhin, dazu geeignete Verpackungsdruckfarben und Drucklacke bereitzustellen, die ohne UV-Strahlung ausgehärtet werden können, außerdem möglichst wenig niedermolekulare Komponenten aufweisen und kostengünstig herzustellen sind.

Gegenstand der vorliegenden Erfindung sind daher Mehrschichtmaterialien zum Herstellen von Verpackungen aus mindestens
- einer Folie 1 aus einem polymeren Material,
- mindestens einer eine Druckschicht, erhältlich durch Bedrukken oder Beschichten mit einer Verpackungsdruckfarbe,
- einer weitere Folie 2,
wobei die Verpackungsdruckfarbe mindestens einen funktionelle Gruppen aufweisenden, hyperverzweigten Polyester als Bindemittel aufweist und die funktionellen Gruppen aus der Gruppe von OH-, COOH- oder COOR-Gruppen ausgewählt werden.

In einem zweiten Aspekt der Erfindung wurde weiterhin eine Verpackungsdruckfarbe für den Flexo- und/oder Tiefdruck gefunden, die mindestens ein Lösemittel oder ein Gemisch verschiedener Lösemittel, mindestens ein Farbmittel, mindestens ein polymeres Bindemittel sowie optional weitere Zusatzstoffe umfasst, wobei es sich bei mindestens einem der polymeren Bindemittel um einen funktionelle Gruppen aufweisenden, hyperverzweigten Polyester handelt und die funktionellen Gruppen aus der Gruppe von OH-, COOH- oder COOR-Gruppen ausgewählt werden.

Weiterhin wurde die Verwendung dieser Verpackungsdruckfarbe zum Bedrucken von Kunststoff- oder Metallfolien und zum Herstellen von Mehrschichtmaterialien gefunden.

In einem dritten Aspekt der Erfindung wurden Drucklacke gefunden, die mindestens ein Lösemittel oder ein Gemisch verschiedener Lösemittel, mindestens ein polymeres Bindemittel sowie optional weitere Zusatzstoffe umfassen, wobei es sich bei mindestens einem der polymeren Bindemittel um einen funktionelle Gruppen aufweisenden, hyperverzweigten Polyester handelt und die funktionellen Gruppen aus der Gruppe von OH-, COOH- oder COOR-Gruppen ausgewählt werden. Weiterhin wurde deren Verwendung zum Grundieren, als Schutzlack sowie zum Herstellen von Mehrschichtmaterialien gefunden.

Überraschenderweise werden durch die Verwendung von Verpackungsdruckfarben und Drucklacken mit Bindemitteln aus hyperverzweigten Polyestern, die OH-, COOH- oder COOR-Gruppen aufweisen, Mehrschichtmaterialien mit hervorragender Haftung zwischen den einzelnen Schichten erhalten. Der Zusatz von Haftvermittlern ist nicht mehr erforderlich. Dabei war es selbst für den Fachmann ganz besonders überraschend und unerwartet, dass ohne Haftvermittler sogar bessere Ergebnisse erzielt werden können, als wenn Haftvermittler zugesetzt werden. Insbesondere auf polaren Folien konnte die Haftung deutlich verbessert werden.

Zu der Erfindung ist im Einzelnen das folgende auszuführen.

Die Folie 1 für das Mehrschichtmaterial besteht aus einem polymeren Material. Geeignete Folien für Verpackungsmaterialien sind beispielsweise in Ullmarsn's Encyclopedia of Industrial Chemistry, 6th Edt., 2000*, Electronic Release* publiziert. Zu nennen sind beispielsweise Polyolefin-Folien wie Folien aus Polyethylen, Polypropylen oder Poly(4-Methyl-1-penten) oder Polystyrol. Bei Polyethylen-Folien kann es sich um Folien aus HDPE, LDPE oder LLDPE handeln. Es kann sich auch um Copolymere wie beispielsweise um Folien aus Ethylen-Vinylacetat-Copolymeren, Ethylen-Acrylsäure-Copolymeren oder Styrol/Butadien-Copolymeren handeln. Weiterhin können Folien aus PVC oder Polycarbonaten eingesetzt werden. Weiterhin können Folien aus polaren Materialien eingesetzt werden, beispielsweise Cellophan-Folien, Polyester-Folien, wie beispielsweise solche aus Polyethylenterephthalat, Polybutylenterephthalat oder Polyethylennaphthalat oder Polyamid-Folien, wie beispielsweise Folien aus PA 6, PA 12, PA 6/66, PA 6/12 oder PA 11.

Bevorzugt handelt es sich bei der Folie 1 um eine Folie aus Polyethylen, Polypropylen, Polystyrol, Polyester- oder Polyamid, ganz besonders bevorzugt sind PET-, PEN- oder Polyamid-Folien.

Bei der Folie 1 kann es sich um eine einschichtige Folie handeln. Es kann sich aber auch um eine mehrschichtige Folie handeln. Mehrschichtige Folien werden bevorzugt durch Coextrusion hergestellt. Die Schichten können aus chemisch gleichartigen, ähnlichen oder unterschiedlichen Polymeren bestehen. Beispielsweise kann eine Polyvinylalkohol-Schicht zwischen zwei Polyolefin-Folien eingebettet sein, oder LLDPE wird mit LDPE kombiniert. Der Begriff mehrschichtige Folien umfasst auch Laminate aus Polymerfolien und Metallfolien, insbesondere Aluminiumfolien.

Weiterhin können die Folien auch beschichtet sein. Zu nennen sind hier beispielsweise metallisierte Folien, insbesondere Al-bedampfte Folien oder mit SiO₂ beschichtete bzw. bedampfte Folien.

Für die Folie 2 können Polymerfolien, metallisierte Polymerfolien oder Metallfolien eingesetzt werden. Als Polymerfolien eigenen sich insbesondere die für Folie 1 offenbarten Materialien. Als Metallfolien werden insbesondere Aluminiumfolien eingesetzt, es kann sich beispielsweise aber auch um Zinnfolien, Kupferfolien oder Goldfolien handeln.

Besonders bevorzugte Mehrschichtmaterialien umfassen zumindest eine polare Folie in Kombination mit einer unpolaren Folie. Als Beispiele seien Verbunde aus Polyamid-Folien oder Polyester-Folien mit Polyolefin-, insbesondere mit Polyethylen- oder Polypropylen-Folien genannt. Weiterhin bevorzugt sind Mehrschichtmaterialien aus Polyamid- und Polyester-Folien oder Verbunde die jeweils nur Polyamid- oder nur Polyester-Folien umfassen.

Das erfindungsgemäße Mehrschichtmaterial umfasst weiterhin mindestens Druckschicht, die durch Bedrucken oder Beschichten mindestens einer der Folien mit einer Verpackungsdruckfarbe erhältlich ist.

Die gedruckte Schicht kann sich auf der Außenseite des Mehrschichtmaterials befinden. Bevorzugt ist die Druckschicht aber zwischen den beiden Folien angeordnet, also im Verbund eingebettet. Die Druckschicht kann sich direkt auf einer der Folien befinden, oder zwischen der Folie und der Druckschicht können sich noch eine oder mehrere andere Schichten befinden. Bevorzugt ist die Druckschicht direkt entweder auf Folie 1 oder auf Folie 2 aufgedruckt.

Das Mehrschichtmaterial kann auch zwei oder mehrere Druckschichten umfassen. Bevorzugt enthalten alle Druckschichten einen hyperverzweigten, funktionelle Gruppen aufweisenden Polyester mit den eingangs definierten funktionellen Gruppen. Die minimale Anforderung ist aber, dass zumindest eine der Druckschichten den besagten Polyester enthält. Die Druckschichten können übereinander gedruckt werden. Beispielsweise kann als erstes eine Grundierung, z.B. mit weißer Farbe, auf eine Folie gedruckt werden und danach eine zweite Schicht mit einem einfarbigen oder mehrfarbigen Dekor. Es kann aber auch die Grundierung auf die eine Folie und das Dekor auf die andere Folie gedruckt werden, oder aber die Grundierung auf die eine Seite und das Dekor auf die andere Seite derselben Folie.

Selbstverständlich kann ein Mehrschichtverbund auch noch weitere Folien über Folie 1 und Folie 2 hinaus umfassen. Die Abfolge der Folien im Verbund wird vom Fachmann je nach den gewünschten Eigenschaften und Verwendungszweck des Mehrschichtmaterials bestimmt .

Das Mehrschichtmaterial kann auch noch weitere Schichten umfassen, mit denen sich jeweils bestimmte Eigenschaften erreichen lassen. Zu nennen sind hier insbesondere Klebeschichten mit denen einzelne oder alle Schichten miteinander verbunden werden können. Weiterhin können zusätzliche Sperrschichten eingebaut werden. Beispielsweise können Polyvinylalkohol-Schichten oder Ethylen-Polyvinylalkohol-Schichten als Wasserdampfsperre eingebaut werden. Es können auch Geruchs- bzw. Aromasperren eingebaut werden. Geeignete Materialien dafür sind beispielsweise in EP-A 707 956 oder EP-A 802 045 offenbart.

Das Mehrschichtmaterial kann auch noch Schichten aus Drucklacken umfassen, beispielsweise zur Grundierung der Folien oder als Schutzlackierung. Dafür können einerseits übliche Drucklacke eingesetzt werden. Besonders vorteilhaft werden aber Drucklacke eingesetzt werden, die mindestens einen funktionelle Gruppen aufweisenden, hyperverzweigten Polyester als Bindemittel aufweisen, wobei die funktionellen Gruppen aus der Gruppe von OH-, COOH- oder COOR-Gruppen ausgewählt werden.

Die Druckschichten im Mehrschichtmaterial sind erhältlich durch Bedrucken oder Beschichten der Folien mittels einer dazu geeigneten Verpackungsdruckfarbe. Bevorzugt wird mittels Flexodruck oder Tiefdruck gedruckt, in Spezialfällen kann aber auch Siebdruck eingesetzt werden.

Mit dem Begriff Verpackungsdruckfarben im Sinne dieser Erfindung sind Lösemittel enthaltende Druckfarben für den Flexodruck und / oder Tiefdruck gemeint, die durch Verdampfen des Lösemittels aushärten. Der Begriff Verpackungsdruckfarben ist selbsterklärend und beschränkend zugleich. Bei Verpackungsdruckfarben handelt es sich um dünnflüssige, schnell trocknende Druckfarben. Sie enthalten dementsprechend relativ niedrig siedende Lösemittel. Deren Siedepunkt beträgt im Regelfalle nicht mehr als 140°C. Siebdruckfarben sind ähnlich formuliert wie Flexo- oder Tiefdruckfarben, sie sind lediglich etwas viskoser eingestellt und weisen üblicherweise Lösemittel mit etwas höheren Siedepunkten auf. UVhärtende Druckfarben sind vom Begriff Verpackungsdruckfarben im Sinne dieser Erfindung nicht umfasst.

Erfindungsgemäß umfasst die Druckfarbe einen funktionelle Gruppen aufweisenden, hyperverzweigten Polyester als Bindemittel, wobei die funktionellen Gruppen aus der Gruppe von OH-, COOH- oder COOR-Gruppen ausgewählt werden. Auch der Begriff Bindemittel ist selbsterklärend und beschränkend zugleich. Bindemittel sind einer der Hauptbestandteile von Druckfarben und für die eigentliche Filmbildung verantwortlich. Sie sorgen für die Verankerung von Pigmenten und Füllstoffen im Farbfilm und für die Haftung auf dem Substrat und werden in der für diesen Effekt notwendigen Menge eingesetzt.

Die vorliegende Erfindung wird mit hyperverzweigten Polyestern im eigentlichen Sinne, d.h. molekular und strukturell uneinheitlichen Polyestern ausgeführt.

Die hyperverzweigten Polyester weisen funktionelle Gruppen auf, wobei es sich um eine oder mehrere, ausgewählt aus der Gruppe von OH-, COOH- oder COOR-Gruppen handelt.

Beim Rest R in der veresterten Carboxylgruppe handelt es sich bevorzugt um Gruppen mit 1 bis 60 C-Atomen. Die Gruppen können auch Heteroatome aufweisen oder weitere Substituenten aufweisen. Beispielsweise handelt es sich bei R um C₁-C₈-Alkylreste, wie beispielsweise Methyl-, Ethyl-, Propyl-, Isopropyl-, n-Butyl-, i-Butyl, t-Butyl-, Hexyl-, Octyl- oder C₆-C₁₂-Aryl bzw. Arylalkylreste wie beispielsweise Benzyl-Reste. Weiterhin bevorzugt sind O-Atome in der Kette aufweisende Reste der allgemeinen Formel -(CHR'-CHR''O)ₙH, wobei n üblicherweise eine natürliche Zahl von 1 - 20 und R' und R" unabhängig voneinander entweder H, eine Methyl- oder eine Ethylgruppe bedeuten.

Die COOR-Gruppe kann bereits in den monomeren Bausteinen für das Polymer vorhanden sein, sie kann aber auch durch nachträgliche Funktionalisierung einer COOH-Gruppe oder eines Derivates davon erzeugt werden.

Bei den funktionellen Gruppen handelt es sich im wesentlichen um terminale Gruppen, die funktionellen Gruppen können aber auch seitenständig angeordnet sein.

Besonders bevorzugt weist der erfindungsgemäß verwendete hyperverzweigte Polyester sowohl OH-Gruppen als auch COOH-Gruppen auf.

Die eingesetzten Polyester können in bekannter Art und Weise durch ihre OH- und ihre Säurezahl charakterisiert werden. Erfindungsgemäß werden hyperverzweigte Polyester eingesetzt, die eine Säurezahl von 1 bis 200 mg KOH/g sowie eine OH-Zahl von 50 bis 500 mg KOH/g aufweisen.

Die Molmasse wird vom Fachmann je nach der Art der vorgesehenen Anwendung gewählt. Bewährt haben sich Produkte mit einem Gewichtsmittel M_{W} von 1000 bis 60 000 g/mol, bevorzugt 1500 bis 50 000 g/mol und besonders bevorzugt 2500 bis 35000 g/mol.

Die Einheitlichkeit der hyperverzweigten Polyester kann in bekannter Art und Weise durch das Verhältnis M_{w}/Mₙ angegeben werden. M_{w/}Mₙ beträgt im allgemeinen 1,2 bis 40, bevorzugt 1,5 bis 30 und ganz besonders bevorzugt 2,0 bis 15.

Die Synthese der hyperverzweigten Polyester kann bevorzugt wie im Folgenden geschildert erfolgen, ohne dass die Erfindung damit auf den Einsatz der nach dieser Herstellmethode synthetisierten Polyester beschränkt wäre.

Bei der bevorzugten Synthese werden Reaktionslösungen umgesetzt, enthaltend
(a) eine oder mehrere Dicarbonsäuren oder eines oder mehrere Derivate derselben mit einem oder mehreren mindestens trifunktionellen Alkoholen,
(b) oder eine oder mehrere Tricarbonsäuren oder höhere Polycarbonsäuren oder eines oder mehrere Derivate derselben mit einem oder mehreren Diolen,
(c) oder eine oder mehrere Tricarbonsäuren oder höhere Polycarbonsäuren oder eines oder mehrere Derivate derselben mit einem oder mindestens trifunktionellen Alkoholen,
(d) oder eine oder mehrere Di- oder Polyhydroxycarbonsäuren,
(e) oder eine oder mehrere Hydroxydi- oder Hydroxypolycarbonsäuren,
oder Mischungen aus mindestens zwei der vorstehenden Reaktionslösungen.

Zu den in Reaktionslösungen nach Variante (a) umsetzbaren Dicarbonsäuren gehören beispielsweise Azelainsäure, Bernsteinsäure, Glutarsäure, Adipinsäure, Pimelinsäure, Sebacinsäure, Dodecan-α,ω-dicarbonsäure, Phthalsäure, Isophthalsäure oder Terephthalsäure wobei die Dicarbonsäuren auch substituiert sein können.

Weiterhin lassen sich Gemische von zwei oder mehreren der vorgenannten Vertreter einsetzen. Die Dicarbonsäuren lassen sich entweder als solche oder in Form von Derivaten einsetzen. Bei Derivaten handelt es sich bevorzugt um Mono- oder Diester, wobei es sich bei den Resten R der einen oder beiden COOR-Gruppen unabhängig voneinander bevorzugt um Gruppen mit 1 - 60 C-Atomen handelt. Die Gruppen R können auch Heteroatome aufweisen oder weitere Substituenten aufweisen. Beispielsweise handelt es sich bei R um C₁-C₈-Alkylreste, wie beispielsweise Methyl-, Ethyl-, Propyl-, Isopropyl-, n-Butyl-, i-Butyl, t-Butyl-, Hexyl- oder C₆-C₁₂-Aryl bzw. Arylalkylreste wie beispielsweise Benzyl-Reste. Weiterhin bevorzugt sind O-Atome in der Kette aufweisende Reste der allgemeinen Formel -(CHR'-CHR''O)ₙH, wobei n üblicherweise eine natürliche Zahl von 1 - 20 und R' und R" unabhängig voneinander entweder H oder eine Methyl- oder Ethylgruppe bedeuten.

Besonders bevorzugt werden Azelainsäure, Bernsteinsäure, Glutarsäure, Adipinsäure, Phthalsäure, Isophthalsäure, Terephthalsäure oder deren Mono- oder Dimethylester eingesetzt. Ganz besonders bevorzugt wird Adipinsäure eingesetzt.

Als mindestens trifunktionelle Alkohole lassen sich beispielsweise einsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt werden Glycerin, Trimethylolpropan, Trimethylolethan oder Pentaerythrit eingesetzt.

Nach Variante (b) in Reaktionslösungen einsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Die Tricarbonsäuren oder Polycarbonsäuren lassen sich entweder als solche oder aber in Form von Derivaten einsetzen, wobei es sich bei den Derivaten bevorzugt um Mono- oder Polyester gemäß obiger Definition handelt.

Als Diole für Reaktionslösungen nach Variante (b) der vorliegenden Erfindung verwendet man beispielsweise Ethylenglykol, Propan-1,2-diol, Propan-1,3-diol, Butan-1,2-diol, Butan-1,3-diol, Butan-1,4-diol, Pentan-1,4-diol, Pentan-1,5-diol, Pentan-2,3-diol, Pentan-2,4-diol, Hexan-1,2-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H oder Gemische von zwei oder mehr Vertretern der voranstehenden Verbindungen, wobei n eine ganze Zahl ist und n = 4. Bevorzugt sind Ethylenglykol, Propan-1,2-diol sowie Diethylenglykol, Triethylenglykol, Dipropylenglykol und Tripropylenglykol.

Nach Variante (c) umsetzbare Reaktionslösungen enthalten beispielsweise ein oder mehrere Triole und eine oder mehrere Tetracarbonsäuren oder ein oder mehrere Derivate derselben. Man kann nach Variante (c) auch eine oder mehrere Tricarbonsäuren oder ein oder mehrere Derivate derselben mit einem oder mehreren tetrafunktionellen Alkohol umsetzen. Die Umsetzung von einem Triol mit einer Tricarbonsäure oder Derivaten gelingt vorzugsweise dann, wenn die Hydroxylgruppen oder die Carboxylgruppen voneinander stark abweichende Reaktivitäten aufweisen.

Die Molverhältnis Hydroxylgruppen zu Carboxylgruppen bei den Varianten (a) bis (c) betragen 3:1 bis 0,3:1, bevorzugt 2:1 bis 0,5:1, insbesondere 1,5:1 bis 0,75:1.

Nach Variante (d) umsetzbare Reaktionslösungen enthalten eine oder mehrere Di- oder Polyhydroxycarbonsäuren, die mindestens 2 Hydroxylgruppen pro Molekül aufweisen, beispielsweise Dimethylolpropionsäure, Dimethylolbuttersäure, Weinsäure, 3,4-Dihydroxyhydrozimtsäure, 2,3-Dihydroxybenzoesäure, 2,4-Dihydroxybenzoesäure, 2,5-Dihydroxybenzoesäure, 3,4-Dihydroxybenzoesäure und 2,6-Dihydroxybenzoesäure oder Gemische derselben.

Nach Variante (e) umsetzbare Reaktionslösungen enthalten eine oder mehrere Hydroxydi- oder Hydroxypolycarbonsäuren, beispielsweise Weinsäure, Zitronensäure, Äpfelsäure, 4-Hydroxyphthalsäure, 2-Hydroxyterephthalsäure oder Gemische derselben.

Die Di- oder Polyhydroxycarbonsäuren bzw. Hydroxydi- oder Hydroxypolycarbonsäuren aus den Varianten (d) und (e) lassen sich entweder als solche oder aber in Form von Derivaten einsetzen, wobei es sich bei den Derivaten bevorzugt um Ester gemäß obiger Definition handelt.

Es können auch Mischungen aus mindestens zwei der vorstehenden Reaktionslösungen der Varianten (a) bis (e) umgesetzt werden.

Die Reaktionslösungen bestehen im einfachsten Fall nur aus den Mischungen der Komponenten, die miteinander umgesetzt werden sollen. Bevorzugt enthalten die Reaktionslösungen auch noch Lösemittel, geeignete Veresterungs- oder Umesterungskatalysatoren sowie gegebenenfalls weitere Additive.

Vorzugsweise arbeitet man in Gegenwart eines Wasser entziehenden Mittels als Additiv, das man zu Beginn der Reaktion zusetzt. Geeignet sind beispielsweise schwach saure Kieselgele, schwach saure Aluminiumoxide, Molekularsiebe, insbesondere Molekularsieb 4 Å, MgSO₄ und Na₂SO₄. Der Einsatz stark saurer Kieselgele ist ebenfalls denkbar. Man kann auch während der Reaktion weiteres Wasser entziehendes Mittel zufügen oder Wasser entziehendes Mittel durch frisches Wasser entziehendes Mittel ersetzen.

Als Veresterungskatalysatoren können beispielsweise in bekannter Art und Weise Säuren, wie beispielsweise H₂SO₄ zugegeben werden. Versterungskatalysatoren sind auch kommerziell erhältlich, beispielsweise unter dem Namen Fascat® (Fa. Elf Atochem) .

In einer besonderen Ausführungsform handelt es sich bei dem Veresterungskatalysator um ein Enzym. Bevorzugt ist die Verwendung von Lipasen und Esterasen. Insbesondere geeignet ist beispielsweise Candida antarctica Lipase B. Das Enzym ist kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark. Die Menge an eingesetztem Enzym beträgt üblicherweise 1 bis 20 Gew.-%, insbesondere 10-15 Gew.-%, bezogen auf die Masse der insgesamt eingesetzten Ausgangsmaterialien.

Weitere Varianten der enzymatischen Synthese sind in unserer noch unveröffentlichten deutschen Anmeldung DE 101 63 163.4 offenbart.

Die Polymerisierung erfolgt üblicherweise durch Erhitzen auf Temperaturen von 50°C bis 200°. Bei der Verwendung von Enzymen sollten 100°C nicht überschritten werden.

Bevorzugt wird die Polymerisation in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon. Die Menge an zugesetztem Lösemittel beträgt üblicherweise mindestens 5 Gew.-%, bezogen auf die Masse der eingesetzten umzusetzenden Ausgangsmaterialien, bevorzugt mindestens 50 Gew.-% und besonders bevorzugt mindestens 100 Gew.-%. Mengen von über 10.000 Gew.-% Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Nach beendeter Reaktion lassen sich die hochfunktionellen hyperverzweigten Polyester isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Besonders zur Ausführung der vorliegenden Erfindung geeignete hyperverzweigte Polyester werden aus Adipinsäure sowie Glycerin und/oder Trimethylolpropan gewonnen.

Die hyperverzweigten Polyester können bei der vorliegenden Erfindung auch im Gemisch mit anderen Bindemitteln eingesetzt werden, wobei vorausgesetzt wird, dass durch die Mischung keine unerwünschten Effekte, wie beispielsweise Ausfällungen eintreten. Beispiele für weitere Bindemittel für die erfindungsgemäße Druckfarbe umfassen Polyvinylbutyral, Nitrocellulose, Polyamide, Polyacrylate oder Polyacrylat-Copolymere. Besonders vorteilhaft hat sich die Kombination der hyperverzweigten Polyester mit Nitrocellulose erwiesen. Die Gesamtmenge aller Bindemittel in der erfindungsgemäßen Druckfarbe beträgt üblicherweise 5 - 35 Gew. %, bevorzugt 6 - 30 Gew. % und besonders bevorzugt 10 - 25 Gew. % bezüglich der Summe alle Bestandteile. Das Verhältnis der Mengen von hyperverzweigtem Polyester zu der Gesamtmenge aller Bindemittel liegt üblicherweise zwischen 30/100 bis 1, bevorzugt 40/100 bis 1, wobei aber die Menge an hyperverzweigtem Polyester im Regelfalle 3 Gew. %, bevorzugt 4 Gew. % und besonders bevorzugt 5 Gew. % bezüglich der Summe aller Bestandteile der Druckfarbe nicht unterschreiten sollte.

Es kann ein einzelnes Lösemittel oder auch ein Gemisch mehrerer Lösemittel eingesetzt werden. Als Lösemittel prinzipiell geeignet sind die üblichen Lösemittel für Verpackungsdruckfarben. Insbesondere geeignet als Lösemittel für die erfindungsgemäße Druckfarbe sind Alkohole wie beispielsweise Ethanol, 1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Als Lösungsmittel ist weiterhin Wasser prinzipiell geeignet. Besonders bevorzugt als Lösemittel ist Ethanol bzw. Gemische, die zu einem überwiegenden Teil aus Ethanol bestehen. Unter den prinzipiell möglichen Lösemitteln trifft der Fachmann je nach den Löslichkeitseigenschaften des Polyesteres und der gewünschten Eigenschaften der Druckfarbe eine geeignete Auswahl. Es werden üblicherweise 40 bis 80 Gew. % Lösemittel bezüglich der Summe aller Bestandteile der Druckfarbe eingesetzt.

Als Farbmittel können die üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew.% Farbmittel bezüglich der Summe aller Bestandteile eingesetzt.

Die erfindungsgemäße Verpackungsdruckfarbe kann optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureeseter oder Ester der Adipinsäure. Zum Dispergieren der Pigmente können Dispergierhilfsmittel eingesetzt werden. Bei der erfindungsgemäßen Druckfarbe kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile der Druckfarbe und beträgt bevorzugt 0 - 10 Gew. %.

Die Herstellung der erfindungsgemäßen Verpackungsdruckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten und einem Teil des Lösemittels hergestellt, die später mit weiteren Bestandteilen und weiterem Lösemittel zur fertigen Druckfarbe weiter verarbeitet wird.

Die erfindungsgemäßen Drucklacke enthalten naturgemäß keine Farbmittel, weisen aber abgesehen davon die gleichen Bestandteile auf wie die bereits geschilderten Druckfarben. Die Mengen der übrigen Komponenten erhöhen sich dementsprechend.

Die mit der Verpackungsdruckfarbe erhältliche Druckschicht weist im wesentlichen die gleiche Zusammensetzung auf, wie die Druckfarbe, abgesehen davon, dass das Lösemittel und gegebenenfalls vorhandene flüchtige Bestandteile ganz oder teilweise verdampfen.

Die Druckschichten weisen eine hervorragende Haftung sowohl auf polaren wie unpolaren Substraten auf. Sie eignen sich insbesondere zum Herstellen von Mehrschichtmaterialien mit Polyamid- oder Polyesterfolien. Mehrschichtmaterialien mit diesen Folien und der erfindungsgemäßen Druckfarbe weisen eine ganz besonders gute Haftung zwischen den Schichten auf.

### Die folgenden Beispiele sollen die Erfindung näher erläutern:

### Herstellung der hyperverzweigten Polyester

Für die Erfindung wurden die folgenden hyperverzweigten Polyester eingesetzt:

### Beispiel 1:

### Synthese mit konventionellem Katalysator

In einen 2 1-Reaktor, versehen mit Rührer, Rückflusskühler und Wasserauskreiser, werden 702 g Adipinsäure, 537 g Trimethylolpropan und 2,4 g Fascat^{®} 4201 (E-Coat, elf atochem) in 200 g Toluol auf 125 bis 130°C erhitzt und das Reaktionswasser entfernt. Nach 11 Reaktionsdauer und Entfernen des Toluols am Rotationsverdampfer im Vakuum wurde ein farbloser, viskoser Polyester. Die analytischen Daten sind in Tabelle 1 zusammengefasst.

### Beispiel 2:

### Synthese ohne Katalysator

In einen 2 1-Reaktor, versehen mit Rührer und absteigendem Kühler, werden 175 g Adipinsäure, 92 g Trimethylolpropan auf 150 bis 170°C erhitzt und das entstehende Reaktionswasser während der Umsetzung abdestilliert. Nach 4 h Reaktionszeit erhält man einen farblosen, viskosen Polyester.

Die analytischen Daten sind in Tabelle 1 zusammengestellt.

### Beispiel 3:

### Synthese mit Enzym als Katalysator

In einem 1-1-Rundkolben werden 105,2 g Adipinsäure und 55,2 g Glycerin in 300 g wasserfreiem Dioxan gelöst. Danach werden 30 g Molekularsieb (0,4 nm) und 20 g immobilisierte Lipase aus Candida Antarctica B (Novozym^{®} 435, Fa. Novozymes Biotech Inc.) zugegeben und die Reaktionsmischung 99 h bei 70°C gerührt. Nach Abkühlen auf Raumtemperatur wird das immobilisierte Enzym abfiltiert und Lösemittel am Rotationsverdampfer bei vermindertem Druck abgezogen. Man erhält einen farblosen, zähflüssigen Polyester.

Die analytischen Daten sind in Tabelle 1 zusammengestellt

**Tabelle 1: Zusammenfassung der Ergebnisse**

| Nr. | Molekulargewicht aus GPC-Daten (PS-Eichung, mobile Phase THF) | | M_{w}/Mₙ | Säurezahl [mg/KOH/g] | OH-Zahl [mg/KOH/g] |
|---|---|---|---|---|---|
| | M_{w} | Mₙ | | | |
| 1 | 16170 | 1590 | 10,2 | 77 | 190 |
| 2 | 4000 | 1540 | 2,6 | 89 | 228 |
| 3 | 30050 | 3180 | 9,5 | 42 | 154 |

### Herstellung von Druckfarben

Es wurden mehrere Flexodruckfarben durch intensives Vermischen der folgenden Komponenten hergestellt.

| | |
|---|---|
| 70,0 | Pigment Präparation (BASF Drucksysteme) |
| 6,0 | Hyperverzweigter Polyester |
| 8,0 | Nitrocellulose (Wolf) |
| 1,0 | Oleamid (Croda) |
| 0,5 | PE-Wachse (BASF AG) |
| 2,0 | Dibutylphthalat (Brenntag) |
| 10,5 | Ethanol |
| 2,0 | Haftvermittler Titanchelat (Du Pont) |

In einer zweiten Serie wurden die gleichen Komponenten eingesetzt, aber lediglich der Haftvermittler weggelassen. Zu Vergleichszwecken wurden außerdem Flexodruckfarben mit konventionellen PU-Bindemitteln hergestellt (PUR 7313 (BASF)), die gemäß dem Stand der Technik üblicherweise für diesen Zweck eingesetzt werden. In Tabelle 2 sind die Formulierungen zusammengestellt:

| Nr. | Bindemittel | Haftvermittler |
|---|---|---|
| Druckfarbe 1 | Gemäß Beispiel 1 | ja |
| Druckfarbe 2 | Gemäß Beispiel 1 | nein |
| Druckfarbe 3 | Gemäß Beispiel 2 | ja |
| Druckfarbe 4 | Gemäß Beispiel 2 | nein |
| Druckfarbe 5 | Gemäß Beispiel 3 | ja |
| Druckfarbe 6 | Gemäß Beispiel 3 | nein |
| Druckfarbe 7 | konventionelles PU-Bindemittel | ja |
| | (PUR 7313 (BASF)) | |
| Druckfarbe 8 | konventionelles PU-Bindemittel | nein |
| | (PUR 7313 (BASF)) | |

### Haftung auf Substraten

Es wurde die Haftung der erfindungsgemäßen Druckfarben auf polaren Folien aus Polyamid und PET sowie auf einer unpolaren Folie aus PP bestimmt.

### Messmethode:

Das Prüfverfahren "Tesafestigkeit" dient zur Bestimmung der Haftung eines Druckfarbenfilms auf dem Bedruckstoff.

### Durchführung der Prüfung

Die auf Druckviskosität verdünnte Farbe wird auf der jeweiligen Folie angedruckt oder mit einem 6 µm-Rakel aufgezogen. Ein Tesabandstreifen (Klebeband mit 19 mm Breite (Artikel BDF 4104, Beiersdorf AG) wird auf den Druckfarbenfilm aufgeklebt, gleichmäßig angedrückt und nach 10 Sekunden wieder abgerissen. Dieser Vorgang wird auf derselben Stelle des Prüflings jeweils mit einem neuen Tesabandstreifen 4 mal wiederholt. Jeder Tesastreifen wird nacheinander auf ein weißes Papier, bei weißen Farben auf Schwarzpapier aufgeklebt. Die Prüfung erfolgt sofort nach Applikation der Farbe.

### Auswertung

Es erfolgt eine visuelle Prüfung der Oberfläche des Prüflings auf Beschädigung. Die Benotung erfolgt von 1 (sehr schlecht) bis 5 (sehr gut) . In Tabellen 3 und 4 sind die Ergebnisse der Tests zusammengefasst.

**Tabelle 3: Testergebnisse mit Druckfarben, die Haftvermittler enthalten**

| | PP-Folie (MB 400) | PET-Folie (Melinex 800) | Polyamid-Folie (Walomid XXL) |
|---|---|---|---|
| Druckfarbe 1 | 5 | 3 | 2 |
| Druckfarbe 3 | 5 | 3 | 3 |
| Druckfarbe 5 | 5 | 4 | 1 |
| Druckfarbe 7 (Vergleich) | 5 | 3 | 1 |

**Tabelle 4: Testergebnisse mit Druckfarben, die keinen Haftver mittler enthalten**

| | PP-Folie (MB 400) | PET-Folie (Melinex 800) | Polyamid-Folie (Walomid XXL) |
|---|---|---|---|
| Druckfarbe 2 | 5 | 1 | 2 |
| Druckfarbe 4 | 5 | 1 | 2 |
| Druckfarbe 6 | 5 | 2 | 1 |
| Druckfarbe 8 (Vergleich) | 1 | 1 | 1 |

### Herstellung von Verbundmaterialien

Mit den Druckfarben 1 - 8 wurden Mehrschichtmaterialien hergestellt. Die Qualität der Verbunde wird durch die Bestimmung der Verbundhaftung zwischen zwei durch Kaschierung verbundenen Folien bestimmt .

### Beispiele 4 - 10

### Allgemeine Arbeitsvorschrift

Die auf Druckviskosität verdünnte Farbe wird auf Folie 1 als Bedruckstoff angedruckt. Parallel dazu wird die Kaschierfolie (Folie 2) mit einer Kleber-Härter-Mischung (R & H MOR-FREE A 4123 / Härter C 88)) so beschichtet, dass eine Filmdicke von etwa 6 µm resultiert. Beide Folien werden anschließend so verpresst, dass die Druckfarbe und der Kleber in Kontakt kommen. Nach dem Verpressen werden die Verbundfolien 3 Tage bei 60°C gelagert und danach der Verbundwert bestimmt. Die Ergebnisse der Tests sind in Tabelle 5 zusammengestellt.

### Beschreibung der Testmethode:

### Mess- und Prüfgeräte: Zugfestigkeitsprüfgerät Fa. Zwick Stanzwerkzeug (Breite: 15mm)

Von dem zu testenden Verbundmaterial werden mindestens je 2 Streifen (Breite: 15mm) längs und quer zur Folienbahn zugeschnitten werden. Zur Erleichterung der Trennung (Delaminierung) des Verbundes können die Enden der ausgestanzten Streifen in ein geeignetes Lösungsmittel (z.B. 2-Butanon) getaucht werden, bis sich die Materialien voneinander lösen. Danach wird das Muster wieder sorgfältig getrocknet. Die delaminierten Enden der Prüflinge werden in den Zugfestigkeitsprüfer eingespannt. Der weniger dehnfähige Film wird in die obere Klemme eingelegt werden. Beim Anlauf der Maschine sollte das Ende des Musters im rechten Winkel zur Zugrichtung gehalten werden, wodurch ein konstanter Zug gewährleistet wird. Die Abzugsgeschwindigkeit beträgt 100 mm/min., der Abzugswinkel der getrennten Filme zum nichtgetrennten Komplex 90°.

### Auswertung:

Abgelesen wird der Verbundwert als Mittelwert, Angabe in N / 15mm.

**Tabelle 5: Ergebnisse zu den Verbunden, Polyamid-Folie: Walomid XXL, PET-Folie : Melinex 800, PP-Folie MB 400**

| Beispiel | Folie 1 | Folie 2 | Druckfarbe | Haftvermittler | Verbundwert |
|---|---|---|---|---|---|
| | Bedruckstoff | Kaschierfolie | | | (N/15 mm) |
| Beispiel 4 | Polyamid | PE | Druckfarbe 1 | Ja | 6,2 |
| Beispiel 5 | Polyamid | PE | Druckfarbe 2 | nein | 4,5 |
| Beispiel 6 | PET | PE | Druckfarbe 1 | Ja | 4,7 |
| Beispiel 7 | PET | PE | Druckfarbe 2 | nein | 4,5 |
| Beispiel 9 | PP | PE | Druckfarbe 1 | Ja | 3,2 |
| Beispiel 10 | PP | PE | Druckfarbe 2 | nein | 5,7 |
| Vergleichsbeispiel 1 | Polyamid | PE | Druckfarbe 7 | Ja | < 0,5 |
| Vergleichsbeispiel 2 | Polyamid | PE | Druckfarbe 8 | nein | < 0,5 |
| Vergleichsbeispiel 3 | PP | PE | Druckfarbe 7 | Ja | 2,5 |
| Vergleichsbeispiel 4 | PP | PE | Druckfarbe 8 | nein | < 0,5 |

Die Testergebnisse zeigen, dass die Haftung der erfindungsgemäßen Druckfarben auch auf chemisch verschiedenen Folientypen durch die Verwendung der hyperverzweigten Polyestern im Vergleich zu konventionellen Bindemitteln deutlich verbessert wird.

Besonders überraschend ist die Tatsache, dass auf Haftvermittler verzichtet werden kann und dennoch sehr gute Ergebnisse bei der Herstellung von Mehrschichtmaterialien erzielt werden konnten.

Die Vorteile im Vergleich zum Stand der Technik sind bei den erfindungsgemäßen Mehrschichtmaterialien noch deutlicher ausgeprägt. Bei konventionellen Systemen wird nach Weglassen des Haftvermittlers bei polaren Folien überhaupt keine Haftung mehr erzielt. Die erfindungsgemäßen Mehrschichtmaterialien mit hyperverzweigten Polyestern zeigen gerade bei Verwendung von polaren Folien eine hervorragende Haftung.

Dieses Ergebnis ist umso überraschender als die einfachen Tesatests dieses sehr gute Ergebnis nicht erwarten ließen.

## Patentansprüche

1. Mehrschichtmaterial zum Herstellen von Verpackungen umfassend mindestens
• eine Folie 1 aus einem polymeren Material,
• mindestens eine Druckschicht, erhältlich durch Bedrucken oder Beschichten mit einer Verpackungsdruckfarbe,
• eine weitere Folie 2,
**dadurch gekennzeichnet,**
**dass** die Druckschicht zwischen den beiden Folien angeordnet ist, und dass die Verpackungsdruckfarbe mindestens einen funktionelle Gruppen aufweisenden, hyperverzweigten Polyester als Bindemittel umfasst, wobei die funktionellen Gruppen aus der Gruppe von OH-, COOH- oder COOR-Gruppen ausgewählt werden, die Säurezahl des hyperverzweigten Polyesters 1-200 mg KOH/g und die OH-Zahl 50-500 mg KOH/g beträgt.

2. Mehrschichtmaterial gemäß Anspruch 1, **dadurch gekennzeichnet, dass** die Druckschicht direkt auf die Folie 1 oder Folie 2 aufgedruckt ist.

3. Mehrschichtmaterial gemäß einem der Ansprüche 1 bis 2, **dadurch gekennzeichnet dass** es sich bei der Folie 1 um eine mehrschichtige Folie handelt.

4. Mehrschichtmaterial gemäß einem der Ansprüche 1 bis 3, **dadurch gekennzeichnet**, das es sich bei der Folie 1 um eine Folie ausgewählt aus der Gruppe von Polyethylen-, Polypropylen-, Polystyrol- Polyester- oder Polyamidfolien handelt.

5. Mehrschichtmaterial gemäß Anspruch 4, **dadurch gekennzeichnet, dass** es sich bei Folie 1 um eine polare Folie ausgewählt aus der Gruppe von PET-, PEN- oder Polyamid-Folien handelt.

6. Mehrschichtmaterial gemäß einem der Ansprüche 1 bis 5, **dadurch gekennzeichnet, dass** es sich bei.der weiteren Folie 2 um eine Folie ausgewählt aus der Gruppe von Polymerfolien, metallisierten Polymerfolien oder Metallfolien handelt.

7. Mehrschichtmaterial gemäß Anspruch 6, **dadurch gekennzeichnet, dass** es sich bei der Folie 2 um eine Polyolefin-Folie handelt.

8. Mehrschichtmaterial gemäß einem der Ansprüche 1 bis 7, **dadurch gekennzeichnet, dass** das Material zusätzlich eine Geruchssperrschicht umfasst.

9. Mehrschichtmaterial gemäß einem der Ansprüche 1 bis 8, **dadurch gekennzeichnet, dass** das Material zusätzlich eine oder mehrere Klebeschichten aufweist.

10. Mehrschichtmaterial gemäß einem der Ansprüche 1 bis 9, **dadurch gekennzeichnet, dass** das Mehrschichtmaterial zusätzlich mindestens eine Lackschicht als Grundierung oder Schutz aufweist.

11. Mehrschichtmaterial gemäß Anspruch 10, **dadurch gekennzeichnet, dass** die Lackschicht mindestens einen funktionelle Gruppen aufweisenden, hyperverzweigten Polyester als Bindemittel aufweist, wobei die funktionellen Gruppen aus der. Gruppe von OH-, COOH- oder COOR-Gruppen ausgewählt werden.

12. Mehrschichtmaterial gemäß einem der Ansprüche 1 bis 11; **dadurch gekennzeichnet dass** der hyperverzweigte Polyester COOH- und OH-Gruppen aufweist.

13. Verpackungsdruckfarbe für den Flexo- und/oder Tiefdruck, mindestens umfassend mindestens ein Lösemittel oder ein Gemisch verschiedener Lösemittel, mindestens ein Farbmittel, mindestens ein polymeres Bindemittel sowie optional weitere zusatzstoffe, **dadurch gekennzeichnet, dass** es sich bei mindestens einem der polymeren Bindemittel um einen funktionelle Gruppen aufweisenden, hyperverzweigten Polyester handelt und die funktionellen Gruppen aus der Gruppe von OH-, COOH- oder COOR-Gruppen ausgewählt werden, die Säurezahl des des hyperverzweigten Polyesters 1-200 mg KOH/g und die OH-Zahl 50-500 mg KOH/g beträgt.

14. Verwendung einer Verpackungsdruckfarbe gemäß Anspruch 13 zum Bedrucken von Kunststoff- oder Metallfolien.

15. Verwendung einer Verpackungsdruckfarbe gemäß Anspruch 13 zum Herstellen von Mehrschichtmaterialien.

16. Drucklack.mindestens umfassend mindestens ein Lösemittel oder ein Gemisch verschiedener Lösemittel, mindestens: ein polymeres Bindemittel sowie optional weitere Zusatzstoffe, **dadurch gekennzeichnet, dass** es sich bei mindestens einem der polymeren Bindemittel um einen funktionelle Gruppen aufweisenden, hyperverzweigten Polyester handelt wobei die funktionellen Gruppen aus der Gruppe von OH-, COOH- oder COOR-Gruppen ausgewählt werden, die Säurezahl des des hyperverzweigten Polyesters 1-200 mg KOH/g und die OH-Zahl 50-500 mg KOH/g beträgt.

17. Verwendung eines Drucklackes gemäß Anspruch 16 zum Grundieren von Kunststoff- oder Metallfolien oder als Schutzschicht.

18. Verwendung eines Drucklackes gemäß Anspruch 16 zum Herstellen von Mehrschichtmaterialien.

## Claims

1. A multilayer material for producing packaging, comprising at least
• one film 1 of a polymeric material,
• one print layer obtainable by printing or coating with a packaging printing ink,
• one further film 2,
wherein
said print layer is arranged between the two films, and wherein said packaging printing ink comprises as binder at least one hyperbranched polyester containing functional groups selected from the group consisting of OH, COOH, and COOR groups, the acid number of the hyperbranched polyester is 1-200 mg of KOH/g, and the OH number is 50-500 mg of KOH/g.

2. The multilayer material according to claim 1, wherein the print layer is printed directly onto film 1 or film 2.

3. The multilayer material according to any of claims 1 to 2, wherein film 1 is a multilayer film.

4. The multilayer material according to any of claims 1 to 3, wherein film 1 is a film selected from the group consisting of polyethylene, polypropylene, polystyrene, polyester, and polyamide films.

5. The multilayer material according to claim 4, wherein film 1 is a polar film selected from the group consisting of PET, PEN, and polyamide films.

6. The multilayer material according to any of claims 1 to 5, wherein the further film 2 is a film selected from the group consisting of polymer films, including metallized polymer films, and metal foils.

7. The multilayer material according to claim 6, wherein film 2 is a polyolefin film.

8. The multilayer material according to any of claims 1 to 7, further comprising an odor barrier layer.

9. The multilayer material according to any of claims 1 to 8, further comprising one or more adhesive layers.

10. The multilayer material according to any of claims 1 to 9, further comprising at least one varnish layer as primer or protector.

11. The multilayer material according to claim 10, wherein the varnish layer comprises as binder at least one hyperbranched polyester containing functional groups selected from the group consisting of OH, COOH, and COOR groups.

12. The multilayer material according to any of claims 1 to 11, wherein the hyperbranched polyester contains COOH and OH groups.

13. A packaging printing ink for flexographic and/or gravure printing, at least comprising at least one solvent or a mixture of different solvents, at least one colorant, at least one polymeric binder, and, optionally, further additives, wherein at least one of the polymeric binders is a hyperbranched polyester containing functional groups and the functional groups are selected from the group consisting of OH, COOH, and COOR groups, the acid number of the hyperbranched polyester is 1-200 mg of KOH/g, and the OH number is 50-500 mg of KOH/g.

14. The use of a packaging printing ink according to claim 13 for printing polymer films or metal foils.

15. The use of a packaging printing ink according to claim 13 for producing multilayer materials.

16. A printing varnish at least comprising at least one solvent or a mixture of different solvents, at least one polymeric binder, and, optionally, further additives, wherein at least one of the polymeric binders is a hyperbranched polyester containing functional groups selected from the group consisting of OH, COOH, and COOR groups, the acid number of the hyperbranched polyester is 1-200 mg of KOH/g, and the OH number is 50-500 mg of KOH/g.

17. The use of a printing varnish according to claim 16 for priming polymer films or metal foils or as a protective layer.

18. The use of a printing varnish according to claim 16 for producing multilayer materials.

## Revendications

1. Matériau multicouche pour la fabrication d'emballages, comprenant au moins :
• une feuille 1 d'un matériau polymère,
• au moins une couche d'impression, que l'on peut obtenir par impression ou enduction avec une encre d'impression pour emballage,
• une autre feuille 2,
**caractérisé en ce que** :
la couche d'impression est aménagée entre les deux feuilles et **en ce que** l'encre d'impression pour emballage comprend, comme liant, au moins un polyester hyperramifié présentant des groupements fonctionnels, les groupements fonctionnels étant choisis dans le groupe constitué des groupements OH, COOH ou COOR, l'indice d'acidité du polyester hyperramifié se situant de 1 à 200 mg de KOH/g et l'indice de OH se situant de 50 à 500 mg de KOH/g.

2. Matériau multicouche selon la revendication 1, **caractérisé en ce que** la couche d'impression est appliquée directement sur la feuille 1 ou sur la feuille 2.

3. Matériau multicouche selon l'une quelconque des revendications 1 et 2, **caractérisé en ce que** la feuille 1 est une feuille à plusieurs couches.

4. Matériau multicouche selon l'une quelconque des revendications 1 à 3, **caractérisé en ce que** la feuille 1 est une feuille choisie dans le groupe des feuilles de polyéthylène, de polypropylène, de polystyrène, de polyester ou de polyamide.

5. Matériau multicouche selon la revendication 4, **caractérisé en ce que** la feuille 1 est une feuille polaire choisie dans le groupe des feuilles de PET, de PEN ou de polyamide.

6. Matériau multicouche selon l'une quelconque des revendications 1 à 5, **caractérisé en ce que** l'autre feuille 2 est une feuille choisie dans le groupe des feuilles polymères, des feuilles polymères métallisées ou des feuilles métalliques.

7. Matériau multicouche selon la revendication 6, **caractérisé en ce que** la feuille 2 est une feuille de polyoléfine.

8. Matériau multicouche selon l'une quelconque des revendications 1 à 7, **caractérisé en ce que** le matériau comprend également une couche barrière aux odeurs.

9. Matériau multicouche selon l'une quelconque des revendications 1 à 8, **caractérisé en ce que** le matériau présente une ou plusieurs couches adhésives supplémentaires.

10. Matériau multicouche selon l'une quelconque des revendications 1 à 9, **caractérisé en ce que** le matériau multicouche présente également au moins une couche de vernis comme apprêt ou protection.

11. Matériau multicouche selon la revendication 10, **caractérisé en ce que** la couche de vernis présente, comme liant, au moins un polyester hyperramifié présentant des groupements fonctionnels, les groupements fonctionnels étant choisis dans le groupe constitué des groupements OH, COOH ou COOR.

12. Matériau multicouche selon l'une quelconque des revendications 1 à 11, **caractérisé en ce que** le polyester hyperramifié présente des groupements COOH et OH.

13. Encre d'impression pour emballage destinée à l'impression flexographique et/ou à l'impression en taille douce, comprenant au moins un solvant ou un mélange de divers solvants, au moins un colorant, au moins un liant polymère, ainsi que, éventuellement, d'autres additifs, **caractérisée en ce qu'**au moins l'un des liants polymères est un polyester hyperramifié présentant des groupements fonctionnels, les groupements fonctionnels étant choisis dans le groupe constitué des groupements OH, COOH ou COOR, l'indice d'acidité du polyester hyperramifié se situant de 1 à 200 mg de KOH/g et l'indice de OH se situant de 50 à 500 mg de KOH/g.

14. Utilisation d'une encre d'impression pour emballage selon la revendication 13, destinée à l'impression sur des feuilles synthétiques ou métalliques.

15. Utilisation d'une encre d'impression pour emballage selon la revendication 13, pour la fabrication de matériaux multicouches.

16. Vernis d'impression, comprenant au moins un solvant ou un mélange de divers solvants, au moins un liant polymère, ainsi que, éventuellement, d'autres additifs, **caractérisé en ce qu'**au moins l'un des liants polymères est un polyester hyperramifié présentant des groupements fonctionnels, les groupements fonctionnels étant choisis dans le groupe constitué des groupements OH, COOH ou COOR, l'indice d'acidité du polyester hyperramifié se situant de 1 à 200 mg de KOH/g et l'indice de OH se situant de 50 à 500 mg de KOH/g.

17. Utilisation d'un vernis d'impression selon la revendication 16, pour l'apprêtage de feuilles synthétiques ou métalliques ou comme couche de protection.

18. Utilisation d'un vernis d'impression selon la revendication 16, pour la fabrication de matériaux multicouches.
